# FASCICULE DE BREVET EUROPEEN

(11) **EP 2 090 476 B1**
(45) Date de publication et mention de la délivrance du brevet: **16.11.2016**
(21) Numéro de dépôt: 09151840.7
(22) Date de dépôt: 02.02.2009
(51) Int. Cl.: B60R 22/24, B62D 25/04, B62D 25/06, B60N 2/28

(54) **Structure de véhicule adaptée à la fixation d'un siège d'enfant rapporté**
Struktur eines Fahrzeugs mit Anpassung der Befestigung eines Kindersitzes
Vehicle structure adapted for the installation of an added child seat.

(30) Priorité: 18.02.2008 FR 0851009
(43) Date de publication de la demande: 19.08.2009
(73) Titulaire: Peugeot Citroën Automobiles SA, 78140 Vélizy-Villacoublay (FR)
(72) Inventeur: Delavigne, Damien, 78460 Chevreuse (FR)
(74) Mandataire: Fernandez, Francis Lionel

(56) Documents cités:
- EP-A- 0 890 489
- JP-A- 11 020 611
- JP-A- 2002 302 012
- US-A1- 2006 001 253

## Description

La présente invention est relative à une structure de véhicule adaptée à la fixation d'un siège d'enfant rapporté sur une place assise d'un véhicule. Plus particulièrement, l'invention concerne un arrangement particulier d'une structure d'un véhicule automobile permettant de supporter des ancrages rigides maintenant fixé un siège d'enfant amovible, sur une place assise d'un véhicule, notamment d'un véhicule automobile.

Les sièges d'enfant destinés à être montés sur une place assise d'un véhicule automobile, désignés par l'expression siège d'enfant rapporté, permettent d'assurer la sécurité des enfants transportés dans les véhicules routiers et notamment les véhicules automobiles.

Ces sièges d'enfant sont généralement constitués d'une coque rigide fixée sur une armature comportant des moyens de fixation permettant par exemple de fixer les sièges d'enfant sur la banquette arrière d'un véhicule automobile. On connaît en particulier des sièges pour enfant munis de moyens de fixation universels désignés par l'appellation « ISOFIX », normalisés par la norme ISO 13216 portant sur « des ancrages dans les véhicules routiers et attaches aux ancrages pour systèmes de retenue pour enfants ».

L'objectif de la norme est d'éviter les erreurs de montage qui peuvent survenir avec des modèles de sièges pour enfants installés dans les véhicules, et ainsi réduire les risques de blessures en cas de collision. La norme ISO 13216 spécifie les dimensions, les exigences générales et les exigences de résistance statique des ancrages rigides destinés à fixer les systèmes de retenue pour les sièges d'enfant dans les véhicules routiers.

Le système ISOFIX est de plus en plus courant dans l'équipement standard des véhicules automobiles. Le système ISOFIX consiste en des verrous venant s'accrocher de façon amovible dans des ancrages rigides ; les verrous ISOFIX sont fixés en partie basse de l'armature du siège pour enfant et les ancrages sont fixés sur des armatures du véhicule automobile, dans une zone de jonction entre le dossier et le coussin d'assise du siège d'adulte.

Selon ladite norme, il est également prévu, en plus de ces deux ancrages constituant deux points d'attache situés de chaque coté du siège d'enfant, un troisième point d'attache situé au niveau de la partie supérieure du dossier du siège d'enfant. Le troisième point d'attache est destiné à maintenir le siège d'enfant et à l'empêcher de basculer vers l'avant en cas de choc important. La partie supérieure du siège d'enfant est reliée à un troisième point d'ancrage à l'aide d'une sangle ; le troisième ancrage est appelé « TOP TEATHER ».

L'emplacement de l'ancrage TOP TEATHER varie en fonction de l'architecture du véhicule et de la disposition des zones dites rigides de l'armature du véhicule automobile. Il existe divers emplacements connus de l'ancrage TOP TEATHER, notamment au niveau de la traverse arrière, au niveau de la tablette arrière ou encore au niveau de l'appui-tête arrière d'un véhicule automobile.

Les ancrages TOP TEATHER au niveau de la traverse arrière du véhicule sont généralement vissés ou soudés directement sur une armature du véhicule automobile appelée traverse arrière de pavillon.

Afin de répondre aux exigences de résistance statique des ancrages selon ladite norme, les ancrages sont soumis à différents essais de résistance, notamment à un essai de tenue à l'arrachement. Dans certaines configurations du véhicule, le positionnement de l'ancrage TOP TEATHER sur la traverse arrière de pavillon ne permet pas de tenir les exigences de tenue à l'arrachement requises selon la norme ISO 13216.

Il existe déjà des réalisations connues de structure de traverse arrière de pavillon renforcée permettant de résister à la force d'arrachement imposée dans la norme. Les réalisations connues comportent néanmoins une ou plusieurs pièces supplémentaires spécifiques, soudées sur la traverse arrière de pavillon du véhicule afin de renforcer ladite traverse arrière de pavillon. L'ensemble ainsi renforcé forme un système complexe de superposition de tôles difficile à réaliser lors des opérations de ferrage.

Aussi, la solution décrite ci-dessus présente certaines difficultés tant en terme de pièces rentrant en jeu dans la composition de la traverse qu'en terme de réalisation de la traverse arrière de pavillon lors des opérations de ferrage du véhicule.

Un véhicule tel que décrit par le préambule de la revendication 1 est connu de JP 11 020 611A.

Dans ce contexte, l'invention vise à fournir une solution aux problèmes qui viennent d'être exposés.

A cet effet, l'invention propose une structure de véhicule tel que décrit par la revendication 1.

Outre les caractéristiques principales qui viennent d'être mentionnées dans le paragraphe précédent, la structure de véhicule adaptée à la fixation d'un siège d'enfant rapporté selon l'invention peut présenter une ou plusieurs caractéristiques supplémentaires parmi les suivantes :
- ledit renfort renforce ladite structure au niveau d'une zone de recouvrement de ladite traverse arrière de pavillon et dudit au moins un gousset supérieur de pied volet ;
- la structure comporte un écrou de serrage solidaire dudit renfort assurant le maintien dudit moyen d'ancrage sur ladite structure ;
- ledit écrou de serrage est solidaire dudit renfort par soudage ;
- ledit écrou de serrage est solidaire dudit renfort par sertissage ;
- ledit renfort présente un appendice recouvrant une zone d'appui dudit écrou de serrage.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention, et dans lesquels :
- la figure 1 est une représentation tridimensionnelle d'une partie de la structure d'un véhicule automobile selon l'invention adaptée à la fixation de moyens d'ancrage d'un siège d'enfant ;
- la figure 2 est une représentation tridimensionnelle de la partie supérieure gauche de la structure représentée en référence à la figure 1 ;
- la figure 3 est une représentation tridimensionnelle illustrant le renfort de la structure selon l'invention et le mode de fixation du moyen d'ancrage sur ladite structure du véhicule automobile ;
- la figure 4 est une vue en coupe du moyen d'ancrage solidaire de la structure du véhicule automobile selon l'invention.

Les notions de direction et de position, de type "haut", "bas", "droite", "gauche" sont mentionnées dans des conditions classiques de disposition des différents éléments concernés lorsqu'ils sont effectivement mis en place dans une structure de véhicule adaptée à la fixation d'un siège d'enfant rapporté.

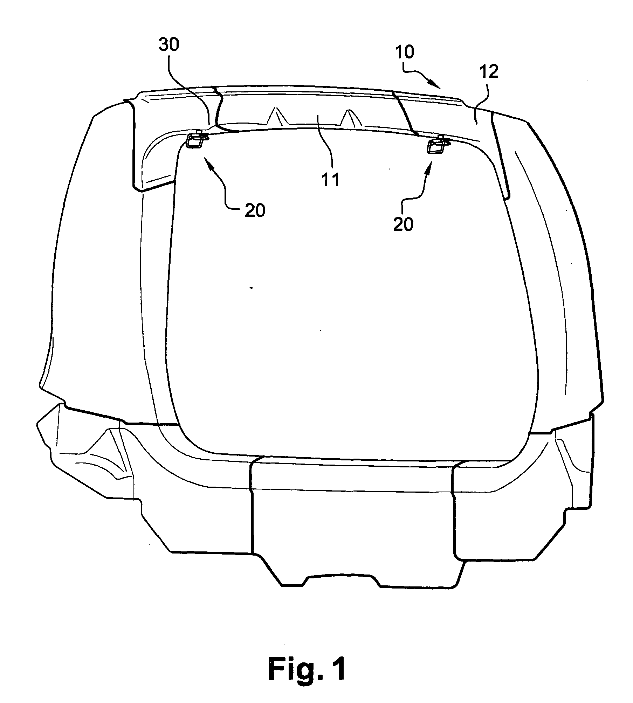

La figure 1 représente une structure 10 d'une partie de l'ossature d'un véhicule automobile, montrant l'emplacement des moyens d'ancrage TOP TEATHER 20 permettant la fixation d'un siège d'enfant ; les moyens d'ancrage 20 sont situés en partie haute de la structure 10. La structure 10 représente une partie de la structure d'ensemble d'un véhicule située vers l'arrière du véhicule, entre la partie habitacle et la partie coffre du véhicule.

La structure 10 présente notamment, en partie haute, une traverse arrière de pavillon 11 prolongée de part et d'autre par un gousset supérieur de pied volet arrière 12. La traverse arrière de pavillon 11 et le gousset supérieur de pied volet arrière 12 se superposent dans une zone de recouvrement 30 renforçant ainsi la rigidité d'ensemble de la structure 10 dans ladite zone de recouvrement 30.

Les moyens d'ancrage TOP TEATHER 20 sont typiquement situés dans ces zones de renforcement 30 de la traverse arrière de pavillon 11, c'est-à-dire dans la partie supérieure droite et la partie supérieure gauche de la structure 10 représentée.

Les moyens d'ancrage 20 sont généralement soudés, ou vissés, sur la traverse arrière de pavillon 11 dans une des zones de renforcement 30.

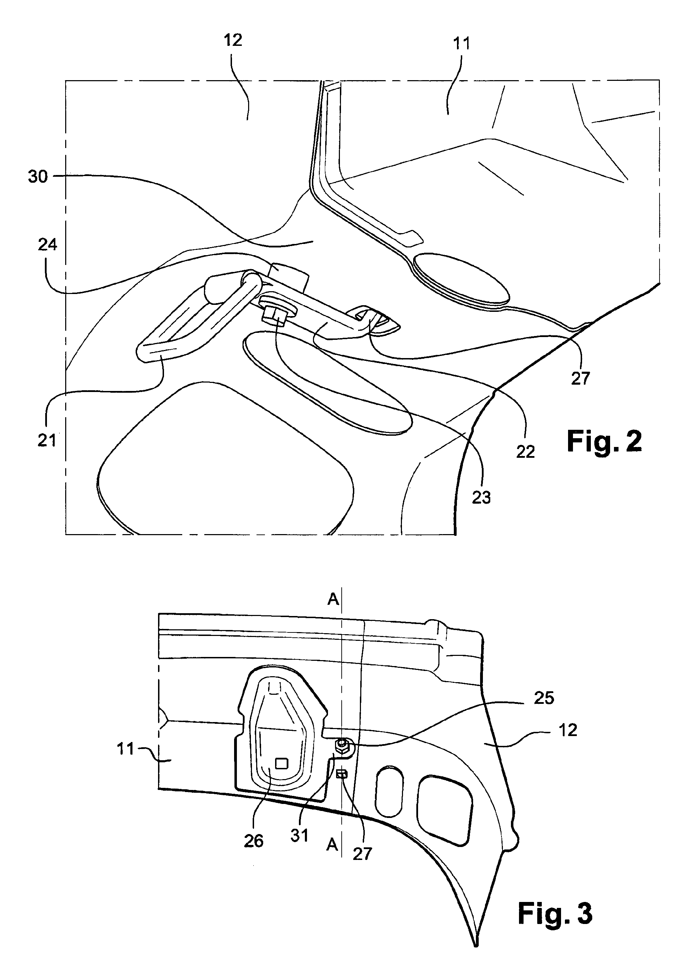

La figure 2 représente une vue tridimensionnelle détaillant la partie supérieure gauche de la structure en référence à la figure 1 coté intérieur véhicule, et contenant le moyen d'ancrage 20.

Le moyen d'ancrage 20 comprend notamment :
- un anneau d'ancrage 21 réalisé en fil métallique plié et mis en forme rectangulaire ;
- une plaque métallique 22 pliée soudée de manière à recevoir l'anneau d'ancrage 22 ; la plaque métallique 22 comprend également une patte pliée 27 située à l'opposé de l'anneau d'ancrage 21, servant de détrompeur et d'anti-rotation lors de la mise en place du moyen d'ancrage 20 sur la structure 10 du véhicule ;
- une entretoise calibrée 24 permettant de maintenir le moyen d'ancrage à une certaine distance de la structure 10 ; l'entretoise calibrée 24 est en appui contre la plaque métallique 22 et la tôle de la traverse arrière de pavillon 11 de la structure 10 du véhicule ;

- un système de fixation du moyen d'ancrage 20 par l'utilisation d'une tige métallique cylindrique ou conique présentant par exemple une saillie hélicoïdale, telle qu'une vis 23 ; la vis 23 de maintien du dispositif d'ancrage 20 traverse la plaque métallique 22 et l'entretoise 24 dudit dispositif d'ancrage 20 puis traverse les différentes épaisseurs de tôles de la structure 10 du véhicule comprenant selon l'exemple représenté, le gousset supérieur de pied volet arrière 12, la traverse arrière de pavillon 11 et le renfort charnière du volet arrière 26 ; ledit renfort charnière du volet arrière 26 assurant un renfort supplémentaire de la zone sollicitée.
- un écrou de serrage 25 ; l'écrou de serrage 25 de forme quelconque permet de maintenir serré l'ensemble des différents éléments compris entre l'écrou 25 et la tête de la vis 23.

Le gousset supérieur de pied volet arrière 12 et la traverse arrière de pavillon 11 présentent chacun une ouverture dans la zone de recouvrement 30 permettant d'introduire la patte pliée 27 du dispositif d'ancrage 20 lors du montage dudit dispositif d'ancrage 20.

La figure 3 représente une vue tridimensionnelle de la partie supérieure droite de la structure 10 coté extérieur véhicule montrant une forme particulière du renfort charnière du volet arrière 26 permettant de renforcer la structure 10 et de maintenir le moyen d'ancrage 20.

En général, le renfort charnière du volet arrière 26 est utilisé uniquement dans le but de renforcer la structure 10 dans sa partie supérieure au niveau de la fixation des charnières de hayon ; le renfort charnière du volet arrière renforce ainsi la structure 10 lors des multiples ouvertures et fermetures du hayon. Selon l'invention, le renfort charnière du volet arrière 26 a une forme particulière permettant d'intégrer une deuxième fonction consistant à renforcer la structure 10 au niveau de la fixation du moyen d'ancrage 20 d'un siège d'enfant. Le renfort charnière du volet arrière 26 est une plaque métallique d'une certaine épaisseur découpée et mise en forme sous presse. La forme particulière du renfort charnière du volet arrière 26 consiste en l'ajout d'un appendice 31, de la forme par exemple d'une oreille, recouvrant ladite zone de fixation du moyen d'ancrage 20 permettant le maintient d'un siège d'enfant. Ainsi, l'empilage de ces trois épaisseurs de tôle permet de tenir les sollicitations imposées notamment en arrachement par la norme ISO 13216.

Le renforcement de la structure 10, et notamment de la zone de fixation du moyen d'ancrage 20, à l'aide du renfort charnière du volet arrière 26 permet de s'affranchir de l'ajout d'une pièce supplémentaire spécifique de renfort dans ladite zone de fixation du moyen d'ancrage 20 d'un siège d'enfant. La suppression de la pièce spécifique de renforcement permet également d'un point du vue process, la suppression d'un outil d'emboutissage et la simplification du moyen de préparation de ferrage des tôles.

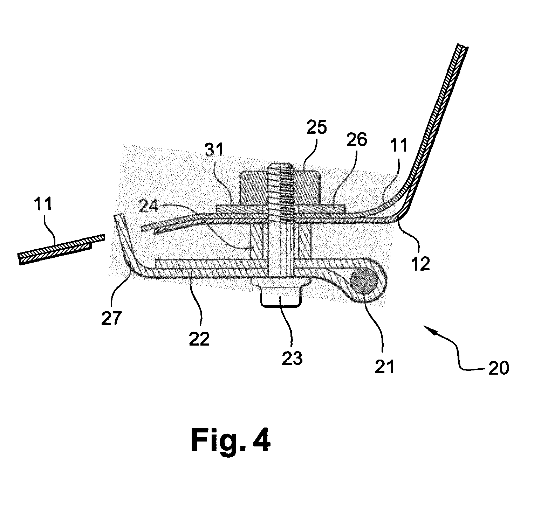

La figure 4 est une vue en coupe de la figure 3 selon les repères A-A. La vue en coupe illustre le principe de montage du moyen d'ancrage 20 d'un siège d'enfant sur la structure 10 (figure 1) du véhicule selon l'invention.

On remarque l'empilement des différentes tôles comprenant le gousset supérieur de pied volet arrière 12, la traverse arrière de pavillon 11 et le renfort charnière du volet arrière 26, l'ensemble garantissant une meilleure tenue à l'arrachement.

L'écrou de serrage 25, en appui sur la tôle du renfort charnière du volet arrière 26, est de forme quelconque et maintenu en position sur ledit renfort charnière du volet arrière 26. Le maintien de l'écrou de serrage 25 peut se réaliser par tous moyens permettant de supprimer les 6 degrés de liberté dudit écrou de serrage 25 ; on entend par degrés de liberté les mouvements indépendants se décomposant suivant trois translations et trois rotations autour d'axes fixes dans les trois directions d'une base liée à l'espace à trois dimensions. Le maintien de l'écrou de serrage 25 peut donc se réaliser notamment par soudage, par sertissage ou encore par l'utilisation de clips de maintien.

Ainsi pour la mise en place du moyen d'ancrage 20, il est nécessaire d'introduire au préalable la patte pliée 27 dans des ouvertures prévues à cet effet dans le gousset supérieur de pied volet arrière 12 et la traverse arrière de pavillon 11, avant de fixer le moyen d'ancrage 20 par vissage. Le serrage par visage se réalise en vissant la vis 23 dans le pas de vis de l'écrou de serrage 25 maintenu en place par l'un des moyens décrits ci-dessus.

## Revendications

1. Véhicule, notamment de véhicule automobile, comportant une structure (10) définissant un habitacle et un coffre et comportant un élément de renfort formé d'une plaque métallique (26) recevant une charnière de volet arrière, le véhicule comporte un anneau d'ancrage (21) pour la fixation d'un siège d'enfant rapporté, ledit anneau est fixé à l'élément de renfort au moyen d'une vis (23) et d'un écrou (25), ladite vis (23) traversant les différentes épaisseurs de tôles formant ladite structure (11,12,26) au droit dudit élément de renfort (26), ledit élément de renfort (26) s'étendant à l'opposé dudit anneau (21) par rapport aux autres tôles (11,12) formant ladite structure au droit dudit élément de renfort (26), **caractérisé en ce que** ledit anneau est réalisé en fil métallique plié et mis en forme rectangulaire et **en ce qu'**une entretoise calibrée (24) permet de maintenir l'anneau d'ancrage (21) à une certaine distance de la structure (10).

2. Véhicule selon la revendication 1 **caractérisé en ce que** l'écrou (25) de serrage de ladite vis (23) vient en appui directement contre la tôle du renfort (26).

3. Véhicule selon l'une des revendications 1 ou 2, **caractérisé en ce que** ladite structure (10) comporte:
- une traverse arrière de pavillon (11),
- au moins un gousset supérieur de pied volet (12), et **en ce que** le renfort (26) renforce ladite structure (10) dans une zone de recouvrement (30) de ladite traverse arrière de pavillon (11) et dudit au moins un gousset supérieur de pied volet (12).

4. Véhicule selon la revendication 2, **caractérisé en ce que** ledit écrou de serrage (25) est solidaire dudit renfort (26) par soudage.

5. Véhicule selon la revendication 2, **caractérisé en ce que** ledit écrou de serrage (25) est solidaire dudit renfort (26) par sertissage.

6. Véhicule selon l'une des revendications 2, 4 ou 5, **caractérisé en ce que** ladite plaque de renfort (26) présente un appendice (31) recouvrant la zone d'appui de l'écrou de serrage (25).

7. Véhicule selon la revendication 2, **caractérisé en ce que** ladite plaque métallique (22) est pliée soudée de manière à recevoir l'anneau d'ancrage (21) et **en ce que** la plaque métallique (22) comprend également une patte pliée (27) située à l'opposé de l'anneau d'ancrage (21), servant de détrompeur et d'anti-rotation lors de la mise en place de l'anneau sur la structure (10).

## Patentansprüche

1. Fahrzeug, insbesondere Kraftfahrzeug, das eine Struktur (10) umfasst, die einen Innenraum und einen Kofferraum definiert und ein Verstärkungselement umfasst, das aus einer Metallplatte (26) gebildet ist, die ein Heckklappenscharnier aufnimmt, wobei das Fahrzeug einen Verankerungsring (21) zum Befestigen eines angebauten Kindersitzes umfasst, wobei der Ring an dem Verstärkungselement mittels einer Schraube (23) und einer Mutter (25) befestigt ist, wobei die Schraube (23) die unterschiedlichen Stärken von Blechen, die die Struktur (11, 12, 26) bilden, im rechten Winkel zu dem Verstärkungselement (26) durchquert, wobei sich das Verstärkungselement (26) dem Ring (21) in Bezug zu den anderen Blechen (11, 12), die die Struktur bilden, im rechten Winkel zu dem Verstärkungselement (26) erstreckt, **dadurch gekennzeichnet, dass** der Ring aus gefaltetem Metalldraht, dem rechteckige Form verliehen wird, hergestellt ist, und dass ein kalibrierter Abstandshalter (24) es erlaubt, den Verankerungsring (21) in einem bestimmten Abstand von der Struktur (10) zu halten.

2. Fahrzeug nach Anspruch 1, **dadurch gekennzeichnet, dass** die Festziehmutter (25) der Schraube (21) direkt gegen das Verstärkungsblech (26) zum Anliegen kommt.

3. Fahrzeug nach einem der Ansprüche 1 oder 2, **dadurch gekennzeichnet, dass** die Struktur (10) Folgendes umfasst:
- einen hinteren Dachquerträger (11),
- mindestens einen oberen Klappenfußzwickel (12), und dass die Verstärkung (26) die Struktur (10) in einem Abdeckungsbereich (30) des hinteren Dachquerträgers (11) und des mindestens einen oberen Klappenfußzwickels (12) verstärkt.

4. Fahrzeug nach Anspruch 2, **dadurch gekennzeichnet, dass** die Festziehmutter (25) fest mit der Verstärkung (26) durch Schweißen verbunden ist.

5. Fahrzeug nach Anspruch 2, **dadurch gekennzeichnet, dass** die Festziehmutter (25) fest mit der Verstärkung (26) durch Falzen verbunden ist.

6. Fahrzeug nach einem der Ansprüche 2, 4 oder 5, **dadurch gekennzeichnet, dass** die Verstärkungsplatte (26) einen Ansatz (31) aufweist, der die Auflagezone der Spannmutter (25) abdeckt.

7. Fahrzeug nach 2, **dadurch gekennzeichnet, dass** die Metallplatte (22) derart gefaltet und geschweißt ist, dass sie den Verankerungsring (21) aufnimmt, und dass die Metallplatte (22) auch eine gefaltete Pratze (27) umfasst, die dem Verankerungsring (21) entgegengesetzt ist, und die als Unverwechselbarkeits- und Drehschutzvorrichtung bei dem Anbringen des Rings auf der Struktur (10) dient.

## Claims

1. A vehicle, in particular a motor vehicle, comprising a structure (10) defining a passenger compartment and a boot and comprising a reinforcement element formed by a metallic plate (26) receiving a rear flap hinge, the vehicle comprises an anchoring ring (21) for the fixing of an added child seat, said ring is fixed to the reinforcement element by means of a screw (23) and a nut (25), said screw (23) passing through the different thicknesses of metal sheets forming said structure (11, 12, 26) perpendicular to said reinforcement element (26), said reinforcement element (26) extending opposite said ring (21) with respect to the other metal sheets (11, 12) forming said structure perpendicular to said reinforcement element (26), **characterized in that** said ring is made from metal wire, bent and made into a rectangular shape, and **in that** a calibrated spacer (24) allows the anchoring ring (21) to be kept at a certain distance from the structure (10).

2. The vehicle according to claim 1, **characterized in that** the tightening nut (25) of said screw (23) comes to rest directly against the reinforcement sheet (26).

3. The vehicle according to one of claims 1 or 2, **characterized in that** said structure (10) comprises:
- a rear roof crosspiece (11),
- at least one upper flap base gusset (12), and **in that** the reinforcement (26) reinforces said structure (10) in a covering zone (30) of said rear roof crosspiece (11) and of said at least one upper flap base gusset (12).

4. The vehicle according to claim 2, **characterized in that** said tightening nut (25) is integral with said reinforcement (26) by welding.

5. The vehicle according to claim 2, **characterized in that** said tightening nut (25) is integral with said reinforcement (26) by crimping.

6. The vehicle according to one of claims 2, 4 or 5, **characterized in that** said reinforcement plate (26) has an appendage (31) covering the support zone of the tightening nut (25).

7. The vehicle according to claim 2, **characterized in that** said metal plate (22) is welded bent so as to receive the anchoring ring (21) and **in that** the metal plate (22) also includes a bent lug (27) situated opposite the anchoring ring (21), serving as a positioner and for anti-rotation during the putting in place of the ring on the structure (10).
